## Europäisches Patentamt
## European Patent Office
## Office européen des brevets

(19)

(11) Numéro de publication: **0 104 290**
**B1**

(12)

# FASCICULE DE BREVET EUROPÉEN

(45) Date de publication du fascicule du brevet:
16.12.87

(51) Int. Cl.⁴: **G 06 F 15/06,** G 06 F 9/38

(21) Numéro de dépôt: **82401768.5**

(22) Date de dépôt: **29.09.82**

(54) Processeur numérique de signal en temps réel.

(43) Date de publication de la demande:
**04.04.84 Bulletin 84/14**

(45) Mention de la délivrance du brevet:
**16.12.87 Bulletin 87/51**

(84) Etats contractants désignés:
**BE CH DE GB IT LI LU NL**

(56) Documents cité:
**ELECTRONIC DESIGN, vol. 30, no. 11, may 1982, pages 153-158, Waseca, MN, Denville, N.Y. US; L.SCHIRM: "Comlex FFTs yield to single-board computer"**
**JOURNAL OF DIGITAL SYSTEMS, vol. V, no. 1/2, 1981, pages 39-65, Computer Science Press, Inc., Rockville, US; R.G.ARNOLD et al.: "The architecture of the MMBC system"**
**PROCEEDINGS OF THE NATIONAL COMPUTER CONFERENCE, 5-8 juin 1978, pages 981-992, Afips Press, Montvale, US; C.R.VICK et al.: "Pepe architecture - Present and future"**
**Implementing functions: microprocessors and firmware, seventh EUROMICRO symposium on microprocessing and microprogramming, Paris, Septembre 8-10, 1981, edited by L. Richter, P. Le Beux, G. Chroust, G. Noguez, North-Holland Publishing Company-Amsterdam, New York, Oxford, pages 455-463**

(73) Titulaire: **I.R.C.A.M. INSTITUT DE RECHERCHE ET DE COORDINATION ACOUSTIQUE/MUSIQUE, 31, rue Saint Merri, F-75004 Paris (FR)**

(72) Inventeur: **Di Giugno, Giuseppe, 26, Avenue du Château, F-92340 Bourg la Reine (FR)**

(74) Mandataire: **Mongrédien, André, c/o BREVATOME 25, rue de Ponthieu, F-75008 Paris (FR)**

## Description

La présente invention a pour objet un processeur numérique de signal en temps réel. Elle trouve des applications en traitement du son, en télécommunications, en traitement d'images, dans l'optimisation de conduite de processus, etc... et plus généralement dans toutes les techniques de traitement de signal en temps réel.

Il est fréquent dans les systèmes informatiques, d'associer à un ordinateur un organe périphérique chargé d'effectuer des traitements particuliers, ce qui décharge l'ordinateur de certaines tâches et le rend disponible pour d'autres.

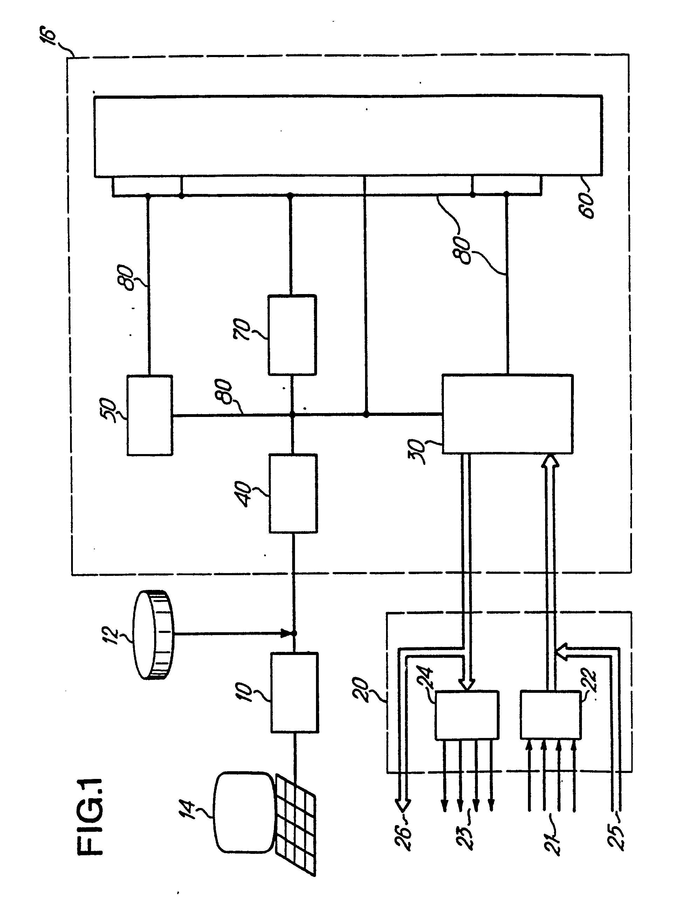

L'organisation générale d'un tel système est illustré sur la figure 1. Un ordinateur 10 est relié à une mémoire de masse 12 et à des organes de dialogue 14. Cet ordinateur est associé à un processeur périphérique 16. Ce processeur comprend tout d'abord un circuit 20 d'entrées-sorties; certaines eentrés 21 sont munies d'un convertisseur analogique numérique 22 et d'autres, 23, d'un convertisseur numérique analogique 24. Ces entrées-sorties travaillent donc en analogique. Les autres entrées 25 et sorties 26 travaillent en numérique. Le processeur périphérique comprend encore une unité 30 de gestion des entrées-sorties, un circuit 40 de couplage avec l'ordinateur 10, une mémoire-tampon 50, des moyens 60 de traitement numérique et un circuit 70 de gestion des moyens 60. L'ensemble de ces moyens est interconnecté par un bus 80.

Dans un tel système l'ordinateur 10 gère le processeur périphérique 16. La mémoire de masse 12 stocke des informations destinées au processeur ou provenant de celui-ci.

Des signaux provenant de l'extérieur peuvent être appliqués aux entrées 21, 25. De même, des signaux délivrés par les sorties 23, 26 peuvent être appliqués à des moyens extérieurs non représentés et dont la nature dépend naturellement de l'application en cours.

Des processeurs numériques de signal en temps réel destinés à être couplés à un ordinateur et à une unité d'entrée-sortie via un circuit d'entrée-sortie sont connus des documents ELECTRONIC DESIGN, volume 30, numéro 11, mai 1982, pages 153-158 et Implementing functions: microprocessors and firmware, seventh EUROMICRO symposium on microprocessing and microprogramming, Paris, Septembre 8-10, 1981, edited by L. Richter, P. Le Beux, G. Chroust, G. Noguez, North-Holland Publishing Company-Amsterdam, New-York, Oxford, pages 455-463.

Suivant le premier document, les moyens de traitement numérique de signaux sont constitués par un seul module qui comprend une unité arithmétique contenant un multiplicateur rapide, un registre à décalage, une mémoire de fonctions, une mémoire de données, une mémoire d'adresses, et une mémoire de microprogrammes.

Dans le second document, les moyens de traitement numérique de signaux sont constitués par une pluralité de modules de traitement interconnectés.

De tels processeurs comprennent des moyens de traitement numérique dont les différents éléments présentent une configuration déterminée à l'avance et qui est fonction du traitement à effectuer. Si cette solution convient bien lorsque ce traitement est toujours le même, elle présente naturellement un inconvénient lorsqu'il s'agit d'effectuer des opérations différentes, pouvant varier en cours de traitement, ou d'un traitement à l'autre.

La présente invention résout ce problème en proposant des moyens de traitement composés d'éléments susceptibles d'être organisés selon diverses configurations. Celles-ci sont commandées par des microprogrammes qui sont enregistrés dans une mémoire spéciale. L'invention porte donc essentiellement sur un processeur tel que l'ensemble 16 de la figure 1 et plus particulièrement sur la structure et la fonction des moyens 60 du système appartenant à ce processeur.

De façon précise, la présente invention a pour objet un processeur numérique de signal en temps réel, destiné à être couplé à un ordinateur, ce processeur comprenant:
- un circuit d'entrées-sorties,
- un circuit de couplage connecté à l'ordinateur,
- une unité de gestion d'entrées-sorties,
- une mémoire tampon,
- des moyens de traitement de signal numérique, l'unité de gestion d'entrées-sorties, la mémoire tampon et les moyens de traitement de signal numérique étant interconnectés par un bus d'interconnexion et par un bus-système, le bus d'interconnexion comprenant un bus récepteur, un bus émetteur et un bus de données, le bus-système comprenant un bus de sélection, un bus d'adresses et un bus d'adresses de formes d'ondes et un bus de données, les moyens de traitement numérique comprenant une pluralité de modules de traitement, chacun de ces modules étant commandé par le bus de sélection, le bus émetteur et le bus récepteur, les données étant échangées entre les modules par le bus de données,
ce processeur étant caractérisé par le fait que chaque module comprend:

a. une unité arithmétique ayant au moins une première entrée connectée à un premier bus A, une seconde entrée et une sortie connectée à un second bus B,

b. un multiplicateur rapide ayant au moins une première entrée connectée au premier bus A et une seconde entrée connectée au second bus B et une sortie connectée à la seconde entrée de l'unité arithmétique,

c. un registre à décalage connecté au second bus B,

d. une mémoire de forme d'ondes contenant des échantillons de formes d'ondes déterminées, cette mémoire étant adressée par le bus d'adresses de forme d'ondes et ayant une sortie connectée au premier bus A,

e. une mémoire de données ayant une entrée connectée au second bus B, une sortie connectée au premier bus A et une entrée d'adressage,

f. une mémoire d'adresses,

g. un premier multiplexeur d'adresses ayant une première entrée connectée au bus-système, une seconde entrée et une sortie connectée à la mémoire d'adresses,

h. un compteur connecté à la seconde entrée du premier multiplexeur,

i. un deuxième multiplexeur d'adresses ayant une première entrée connectée au bus d'adresses et une seconde entrée connectée à la mémoire d'adresses et une sortie connectée à l'entrée d'adressage de la mémoire de données,

j. une mémoire de microprogrammes, chaque microprogramme contenant des instructions aptes à interconnecter les divers éléments d'un module, cette mémoire ayant une sortie connectée au bus-système, cette mémoire de microprogrammes étant adressée par le compteur,

k. une première mémoire tampon connectée entre le premier bus A et le bus d'interconnexion et,

l. une seconde mémoire tampon connectée entre le second bus B et le bus-système.

De toute façon, les caractéristiques et avantages de l'invention apparaîtront mieux après la description qui suit, d'exemples de réalisation donnés à titre illustratif et nullement limitatif. Cette description se réfère à des dessins annexés, qui font suite à la figure 1 déjà décrite et sur lesquels:

- la figure 2 représente schématiquement l'organisation des cartes portant les circuits du processeur et leur mode de liaison,

- la figure 3 représente un schéma synoptique d'un des modules conforme à l'invention,

- la figure 4 montre un exemple de configuration réalisable avec un module de l'invention,

- les figures 5a, 5b, 5c et 5d illustrent quatre traitements pouvant être obtenus avec la configuration de la figure 3,

- la figure 6 montre un autre exemple de configuration réalisable avec un module de l'invention, cette configuration correspondant à un générateur de formes d'ondes,

- la figure 7 représente quatre fonctions possibles pouvant être obtenues avec la configuration de la figure précédente,

- la figure 8 illustre une autre configuration dérivée de celle de la figure 5 et permettant d'obtenir une modulation d'amplitude,

- la figure 9 représente encore une autre configuration faisant intervenir un registre à décalage,

- la figure 10 montre l'organisation de la mémoire d'adresses,

- la figure 11 représente trois diagrammes illustrant l'adressage du système,

- les figures 12a, 12b et 12c représentent à titre d'exemple d'application des circuits permettant de réaliser une fonction de filtrage.

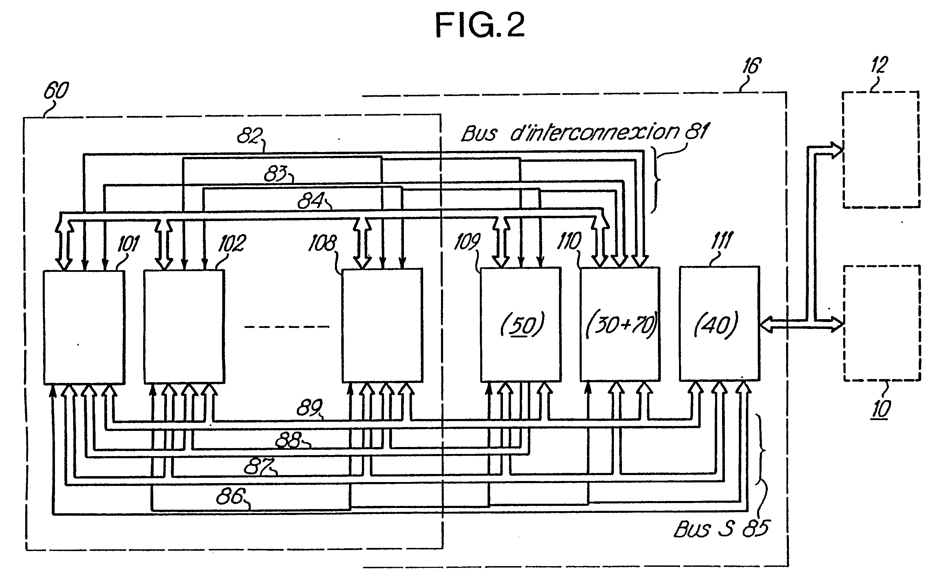

Selon une technique connue, la plupart des circuits du processeur de l'invention sont rassemblés sur des cartes. Celles-ci sont rassemblées dans un tiroir standardisé placé dans une baie. Cette baie contient également une alimentation 7,5 V servant à commander des régulateurs 5 V implantés sur chaque carte. La figure 2 représente schématiquement l'organisation pratique des circuits du processeur et précise les liaisons entre ces circuits.

Tel que représenté le processeur comprend huit cartes identiques de traitement, référencées de 101 à 108, l'ensemble formant un moyen 60 de traitement. La mémoire-tampon 50 est disposée sur une neuvième carte 109. L'unité de gestion 30 des entrées-sorties ainsi que le circuit 70 de gestion sont groupés sur une carte supplémentaire 110. Enfin, le circuit 40 de couplage avec l'ordinateur est disposé sur une onzième carte 111.

Les cartes de traitement 101 à 108 ainsi que les cartes 109 et 110 sont reliées par un bus d'interconnexion 81 composé d'un bus récepteur 82, d'un bus émetteur 83 et d'un bus de données 84. Par ailleurs, toutes les cartes sont reliées par un bus-système 85 (bus S) composé d'un bus de sélection 86, d'un bus d'adresses 87, d'un bus d'adresses de formes d'ondes 88 et d'un bus de données 85.

La communication entre le calculateur et les différentes cartes, via la carte de couplage 40, s'opère comme suit: un adressage hiérarchisé permet de choisir:

- une carte parmi 10, (de 101 à 110) par décodage, via le bus 86 de sélection,

- une mémoire dans la carte sélectionnée, hormis la mémoire de formes d'ondes, par la partie haute du bus d'adresses 87,

- une position dans la mémoire sélectionnée, par la partie basse du bus d'adresses 87.

Les données sont véhiculées par le bus bidirectionnel de données 89.

Les mémoires de formes d'ondes des cartes de traitement sont adressées par le bus d'adresses 88 issu d'une logique particulière implantée dans la carte 50.

La communication entre cartes est régie par:

- le bus émetteur 83 qui sélectionne la carte émetteur,

- le bus récepteur 82 qui sélectionne la ou les cartes réceptrices,

- le bus de données 84 véhiculant les données.

Avant de décrire plus en détail les cartes de traitement 101 à 108, quelques indications seront données sur la structure des cartes 109 à 111 qui leur sont associées.

La carte 109 tout d'abord contient une mémoire de lecture-écriture, à stockage permanent, d'une capacité de 16 K mots de 16 bits (K = 1024), assurant la liaison entre le processeur et les dispositifs placés sur le bus système 85 (bande magnétique, disque, etc...).

Cette mémoire-tampon est chargée de stocker deux types d'informations, des données et exceptionnellement des configurations fonctionnelles:

- les données sont, soit des informations produites par le processeur, qui doivent être stockées en vue d'une utilisation ultérieure; soit des informations destinées au processeur en vue d'un traitement;

- les configurations fonctionnelles sont des éléments de programmation permettant de créer les différentes structures fonctionnelles des cartes; celles-ci transitent habituellement directement de l'ordinateur 10 vers la mémoire concernée, via le bus 85; ce qui permet de créer et d'utiliser une bibliothèque de structures fonctionnelles.

Un exemple tiré du domaine électro-acoustique peut être donné: après avoir obtenu une configuration orchestrale, la programmation définissant celle-ci peut être mémorisée en vue de sa réutilisation. D'autre part, l'oeuvre produite peut également être mémorisée sous forme de données. Une oeuvre ainsi préenregistrée peut servir de données de base à un traitement ultérieur.

Quant à la carte 110, elle comprend:

- des circuits d'horloge assurant la génération de signaux d'interruption,

- une logique d'arbitrage du bus d'interconnexion 81 et sa mémoire de signal associée, le tout constituant le circuit de gestion 70,

- l'unité de gestion des entrées-sorties assurant la liaison entre le processeur et l'extérieur.

Les circuits d'horloge sont des compteurs programmables qui permettent de déterminer des intervalles de temps à la fin desquels une requête d'intervention au calculateur (interruption) l'oblige à suspendre la tâche qu'il effectuait, afin de modifier des éléments du traitement en cours dans le processeur.

Dans le domaine électro-acoustique par exemple, les principales applications des circuits d'horloge sont, l'élaboration d'enveloppes pour l'évolution des amplitudes et des fréquences des oscillateurs, l'évolution des fréquences de coupure de filtres, etc....

La logique d'arbitrage permet le transfert de données entre une carte et d'autres parmi les huit cartes de traitement, la carte mémoire 50 et la carte 110 elle-même, ceci par l'intermédiaire du bus d'interconnexion 81. Les interconnexions à réaliser sont spécifiées par le contenu d'une mémoire de 512 mots de 14 bits préalablement chargée par le calculateur.

L'unité de gestion des entrées-sorties gère la communication avec l'extérieur, soit sous forme numérique (entrées 25, sorties 26 de la figure 1), soit sous forme analogique (entrées 21, sorties 23); dans ce cas, elle prend en charge la gestion des convertisseurs analogiques-numériques et numériques-analogiques placés à l'extérieur.

En ce qui concerne la carte d'interface 40, elle assure la fonction classique de couplage entre le processeur et l'ordinateur choisi. Une partie de celle-ci est invariante, puisqu'elle crée le bus système 85, alors qu'une autre partie est spécifique de l'ordinateur utilisé et donc doit changer avec celui-ci.

Les cartes de traitement vont maintenant être décrites.

Chaque carte communique avec l'ordinateur et sa périphérie par l'intermédiaire de la carte 40, à l'aide du bus système 85, soit directement, soit par l'intermédiaire d'une mémoire-tampon. Elle peut aussi échanger les informations traitées avec les autres cartes par l'intermédiaire du bus d'interconnexion 81.

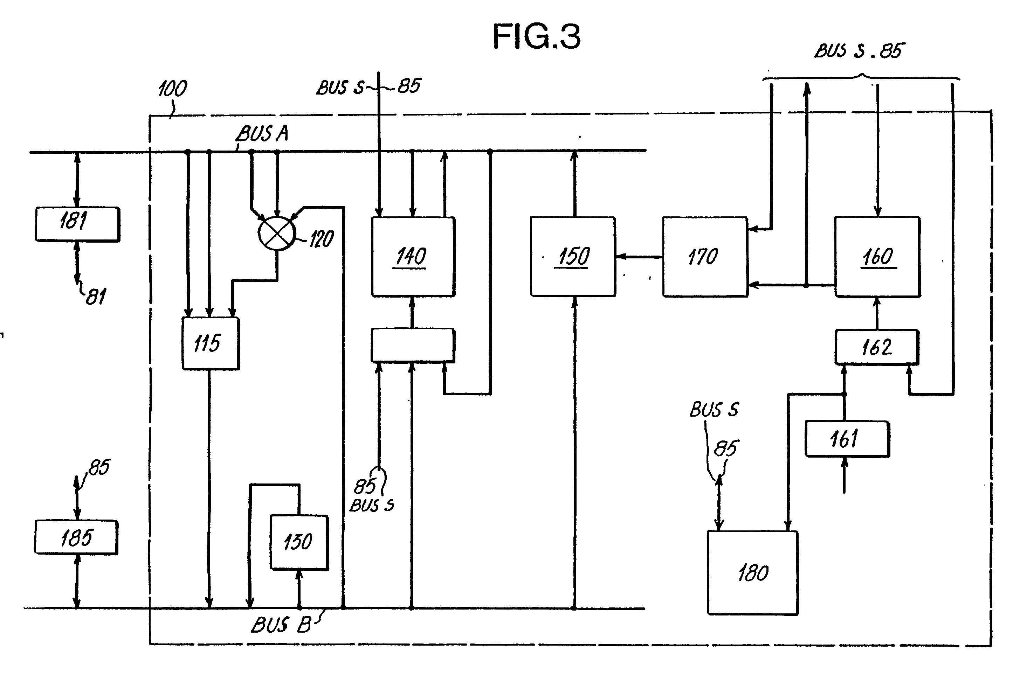

La structure fonctionnelle de la carte de traitement est illustrée par la figure 3. Les éléments fonctionnels communiquent entre eux par l'intermédiaire d'un bus A et d'un bus B selon une structure dite "pipe-line". Cette structure permet d'accroître la vitesse de traitement. Elle consiste en une série de sections, chargées chacune d'effectuer une partie du traitement, les informations se succédant dans les sections comme le fait un fluide dans une canalisation.

Les éléments fonctionnels constituant la carte comprennent:

a) - une unité arithmétique 115 pouvant effectuer, sur des nombres X et Y, des opérations arithmétiques telles que $X+Y$, $X-Y$, $Y-X$, par exemple sur 24 bits;

b) - un multiplicateur rapide 120 réalisant l'opération $X \times Y$ sur 16 bits en entrée, avec 24 bits en sortie;

c) - un registre à décalage 130 permettant de réaliser des interpolations linéaires en conjugaison avec l'unité arithmétique 115 et le multiplicateur 120;

d) - une mémoire de fonctions 140, par exemple de 64 Kmots de 16 bits, ontenant les échantillons des formes d'ondes que l'on désire créer. Cette mémoire peut être divisée au maximum en 64 blocs de 1 Kmot, ce qui permet de disposer de 64 formes d'ondes différentes;

e) - une mémoire données 150, par exemple de 512 mots de 24 bits, contenant les informations traitées par l'unité 115, le multiplicateur 120 et contenant aussi des adresses pour la mémoire de fonctions 140; l'ordinateur ainsi que les autres cartes du processeur peuvent avoir accès à cette mémoire;

f) - une mémoire d'adresses 160, par exemple de 1024 mots de 9 bits, permettant l'exploration séquentielle de la mémoire de données 150 pendant le déroulement du microprogramme; cette exploration est commandée par un compteur 161 relié à un multiplexeur 162; par ailleurs la mémoire d'adresses 160 est reliée à la mémoire de données 150 par un multiplexeur d'adresses 170;

g) - une mémoire de microprogrammes 180, par exemple de 512 mots de 32 bits, contenant jusqu'à 16 configurations de fonctionnement pour la carte; chaque configuration, constituée par 32 mots de 32 bits, permet l'interconnexion des différents éléments de la carte et constitue le microprogramme exécuté; (un microprogramme est la suite des opérations à effectuer pour exécuter une instruction);

h) - chaque carte peut comprendre également deux mémoires-tampon 181, 185 disposées respectivement entre le bus A et le bus d'interconnexion 81 et le bus B et le bus système 85.

L'ensemble de ces éléments, interconnectés selon le microprogramme en cours, peut échanger des informations (données ou adresses) avec les autres cartes du système, via le bus d'interconnexion 81 ou avec l'extérieur via le bus système 85.

Les éléments décrits ci-dessus peuvent être utilisés séparément; toutefois, c'est par leur assemblage en structures fondamentales, réalisé par microprogrammation que se trouvent matérialisés les éléments fonctionnels du traitement à effectuer.

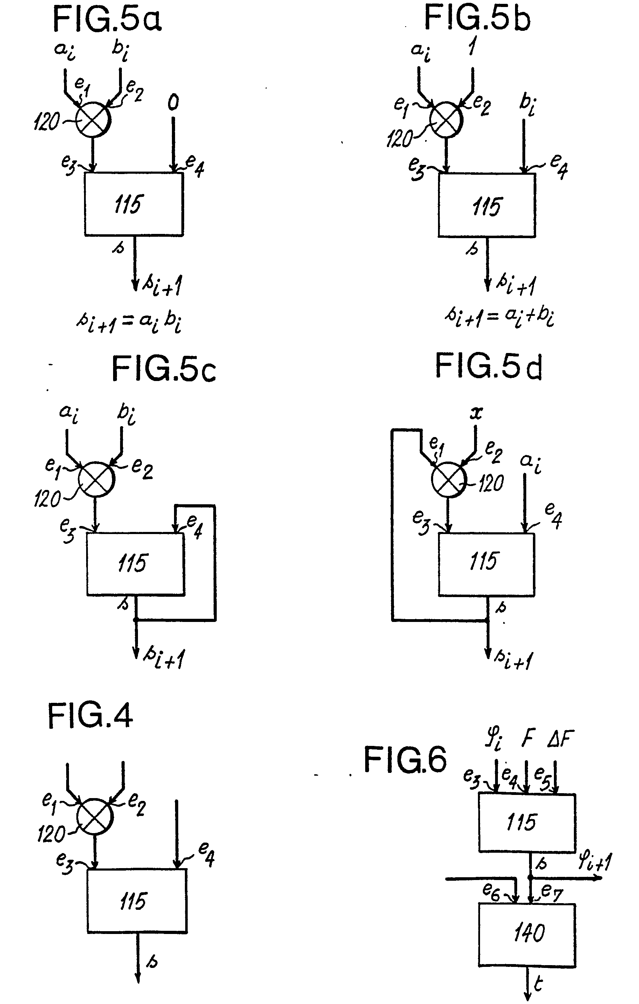

Parmi un large éventail de possibilités, les figures 4, 5, 6, 8, 9 représentent quelques structures fondamentales parmi les plus utilisées dans le traitement du signal. Chacune de ces structures permet de réaliser plusieurs types de traitement.

La structure de la figure 4 tout d'abord montre un multiplicateur 120 à deux entrées $e_1$ et $e_2$, une unité arithmétique 115 dont une entrée $e_3$ est reliée au multiplicateur 120 et dont une autre entrée est notée $e_4$. Cette unité délivre un signal sur une sortie $\underline{s}$.

Selon les signaux appliqués aux entrées $e_1$, $e_2$ et $e_4$, on obtient différentes fonctions comme le montrent, de manière non exhaustive, les schémas des figures 5a, 5b, 5c et 5d.

Selon le schéma de la figure 5a, deux nombres $a_i$ et $b_i$ (i représentant un rang dans une suite) sont appliqués sur les entrées du multiplicateur 120 et l'entrée $e_3$ de l'unité arithmétique 115 est fixée à 0. La sortie de cette unité délivre un nombre noté $s_{i+1}$ égal au produit de $a_i$ par $b_i$:

$$s_{i+1} = a_i b_i$$

Selon le schéma de la figure 5b, l'entrée $e_1$ reçoit un nombre $a_i$, l'entrée $e_2$ un signal unitaire 1, et l'entrée $e_4$ un nombre $b_i$. La sortie $\underline{s}$ délivre alors un signal somme:

$$s_{i+1} = a_i + b_i$$

Selon le schéma de la figure 5c, les entrées $e_1$ et $e_2$ reçoivent des nombres $a_i$ et $b_i$, et l'entrée $e_4$ est reliée é la sortie $\underline{s}$. On obtient alors un signal de sortie $s_{i+1}$ de la forme:

$$s_{i+1} = a_i b_i + s_i$$

ce qui permet le calcul d'expressions du type:

$$a_0 b_0 + a_1 b_1 + a_2 b_2 + ...$$

Enfin, selon le schéma de la figure 5d, l'entrée $e_1$ est rebouclée sur la sortie $\underline{s}$, l'entrée $e_2$ reçoit un signal x, et l'entrée $e_4$ un signal $a_i$. Le signal de sortie est de la forme:

$$s_{i+1} = s_i x + a_i$$

ce qui permet le calcul de polynomes par la formule récurrente:

$$s_{i+1} = (s_{i-1} x + a_{i-1}) x + a_i$$

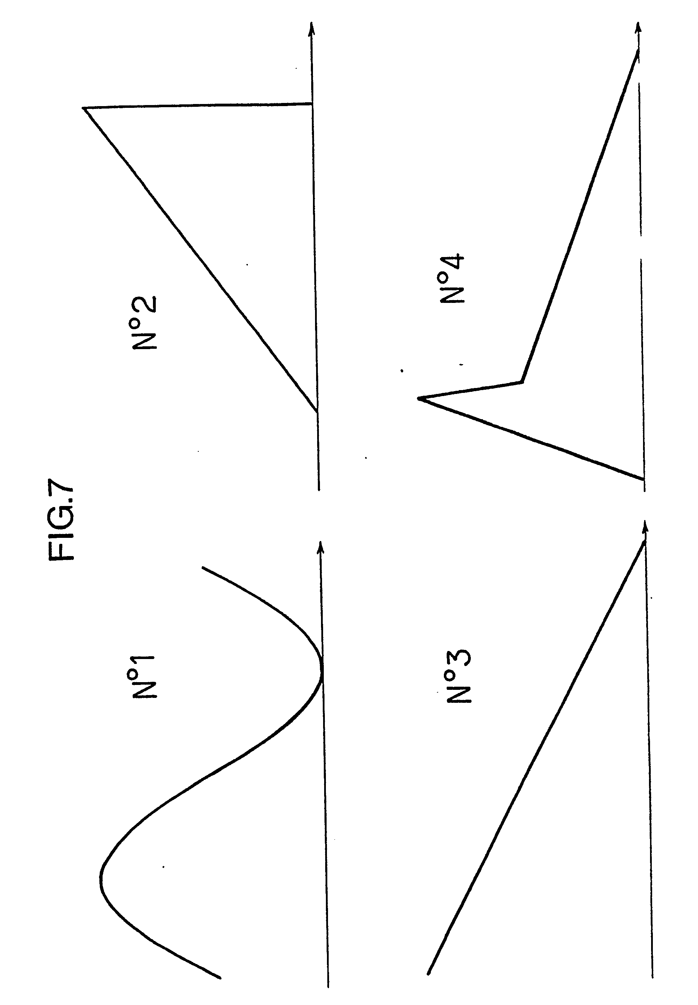

La figure 6 illustre une configuration faisant intervenir l'unité arithmétique 115 qui travaille avec trois entrées $e_3$, $e_4$, $e_5$ et la mémoire de formes d'ondes 140. Cette dernière contient des échantillons des fonctions à reproduire. Cette mémoire comprend une entrée de sélection $e_6$ et une seconde entrée $e_7$ qui correspond à une adresse. Cette entrée est reliée à la sortie $\underline{s}$ de l'unité 115. La mémoire 140 possède par ailleurs une sortie $\underline{t}$.

Une forme d'onde particulière est obtenue, d'une part en choisissant un signal approprié sur l'entrée $e_6$ et, d'autre part, en explorant séquentiellement la mémoire afin de placer sur la sortie $\underline{t}$ la suite des échantillons correspondants. La figure 7 représente quatre fonctions possibles. Le mode d'exploration détermine l'occurrence temporelle de la forme d'onde. Ainsi, une incrémentation simple de l'adresse de la mémoire 140 fera apparaître, dans le cas de l'onde n° 1, une sinusoïde dont la fréquence est liée à l'incrément (plus l'incrément est grand, plus la fréquence est élevée). Un incrément variable permet de réaliser une modulation de frequence.

Sur les entrées de l'unité 115, on peut présenter la phase initiale $\varphi_i$ (entrée $e_3$) la fréquence F (entrée $e_4$), le pas de fréquence $\Delta$F (entrée $e_5$) et les paramètres de la modulation de fréquence. Dans ce cas, la sortie $\underline{s}$ délivrant $\varphi_{i+1}$ est rebouclée sur l'entrée $e_3$.

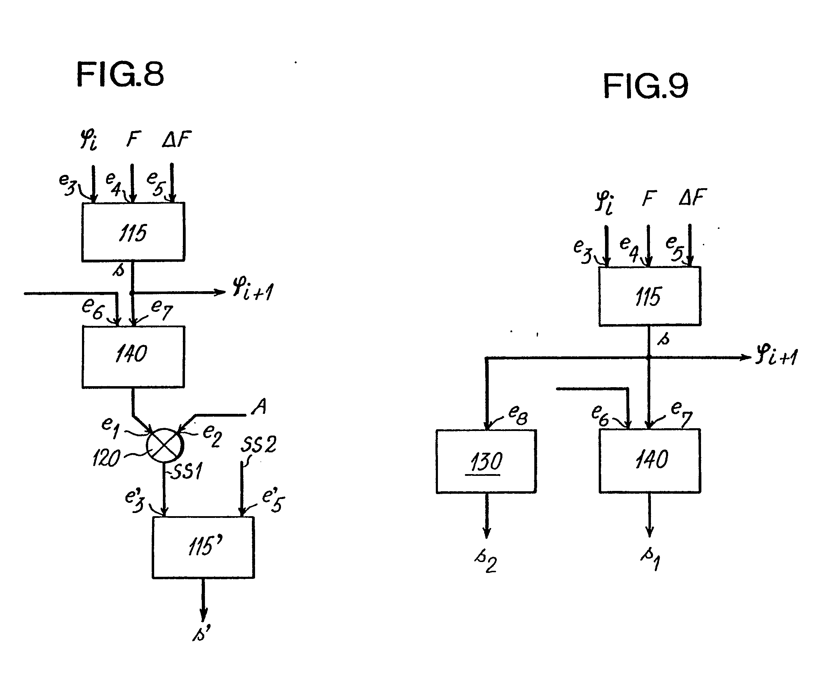

Le schéma de la figure 8 correspond à celui de la figure 6 (unité arithmétique 115 et mémoire de formes d'ondes 140) avec, en plus, un multiplicateur 120 relié à la sortie de la mémoire 140. Par ailleurs, ce multiplicateur reçoit sur son entrée $e_2$ un signal A permettant d'obtenir une modulation d'amplitude. Le signal de sortie noté $SS_1$ délivré par le multiplicateur 120 peut être mélangé à un autre signal, noté $SS_2$, par une seconde unité arithmétique 115' recevant ces deux signaux sur ses entrées $e'_3$ et $e'_5$.

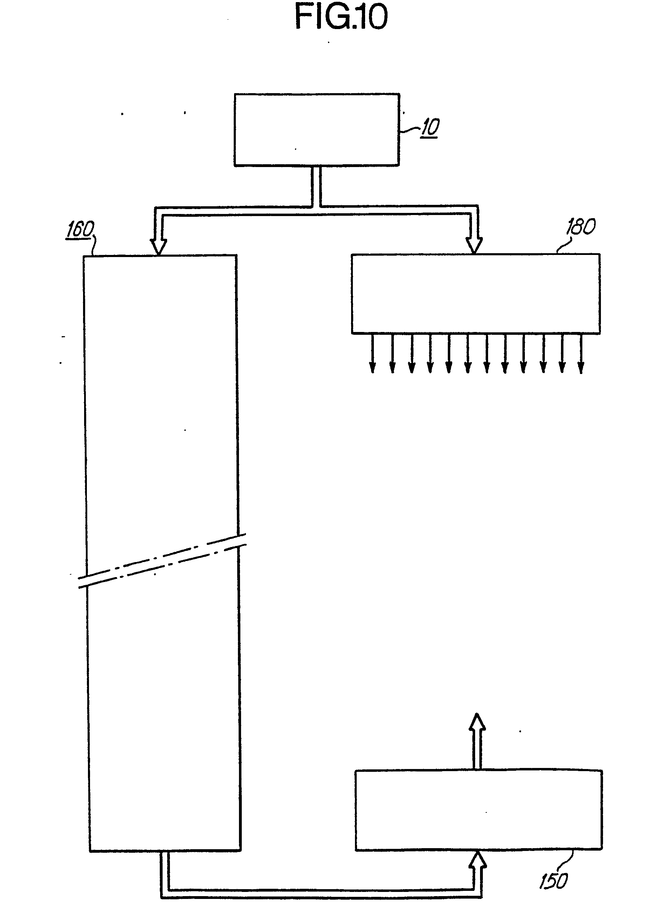

La figure 9 représente une variante dans laquelle le circuit de la figure 6 est complété par le registre à décalage 130 dont l'entrée $e_8$ est reliée à la sortie $\underline{s}$ de l'unité 115. Ce circuit permet de réaliser une interpolation linéaire en utilisant les bits de poids faible, (en deçà du 16ème, par exemple, pour 24 bits manipulés pendant le calcul).

Naturellement, plusieurs configurations fonctionnelles telles que celles qui viennent d'être décrites peuvent être regroupées par microprogrammation sur une même carte.

Pour ce qui est du séquencement du système, il est obtenu par une horloge dont la fréquence est, selon un mode de réalisation utilisé par le demandeur, de 16,384 MHz. Dans ce cas, un cycle d'instruction élémentaire, ou microcycle a une durée de 61,035 ns.

Durant chaque microcycle, la mémoire du microprogramme délivre une microinstruction qui établit la configuration fonctionnelle correspondant à l'action exécutée durant ce microcycle. Les opérandes sur lesquelles travaillent les microinstructions ont leurs adresses dans la mémoire d'adresses 160. Les 32 microinstructions, correspondant aux 32 mots de la mémoire de microprogrammes 180, forment un cycle intermédiaire de durée 1,95 µs.

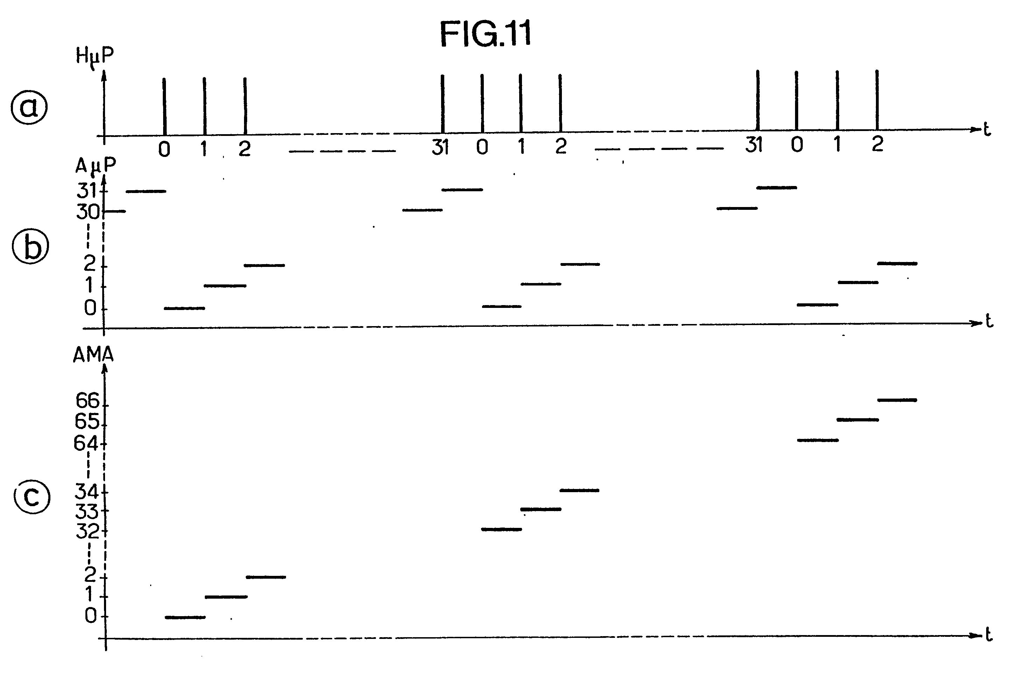

Le microprogramme, dans un cycle complet de durée 62,5 µs est exécuté 32 fois avec des données différentes, ce qui implique que la mémoire d'adresses 160 ait une taille de 32x32 mots, soit 1024 mots. L'organisation de cette mémoire est illustrée sur la figure 10. Les 32 blocs de la mémoire 160 sont référencés respectivement: $A_0$ pour celui qui contient les adresses relatives au cycle O, $A_1$ pour celui qui contient les adresses relatives au cycle 1, etc... et $A_{31}$ pour le dernier.

L'exploration des adresses est illustrée sur la figure 11, qui comprend trois diagrammes temporels: le premier, a, représente les impulsions d'horloge de microprogramme HMP, le second, b, les adresses explorées dans la mémoire de microprogrammes 180, soit AµP, et le troisième, c, les adresses de la memoire d'adresses 160, soit AMA.

On remarque que les structures fondamentales créées durant un cycle intermédiaire sont obtenues 32 fois durant le cycle complet.

Par exemple, il est possible de créer sept multiplieurs-additionneurs du type de la figure 4 durant un cycle intermédiaire, soit $7 \times 32 = 224$ multiplieurs-additionneurs travaillant sur des données distinctes durant un cycle complet. La période d'échantillonnage du traitement du signal est dans ce cas de 62,5 µs, soit une fréquence d'échantillonnage de 16000 Hz, ce qui correspond à une bande passante de signal traité de 8000 Hz. (Le théorème de Shannon montre que la bande passante maximale d'un signal échantillonné est la moitié de la fréquence d'échantillonnage).

Pour traiter des signaux de bande passante supérieure, il faut répéter à l'intérieur du cycle complet, le microcycle utilisé.

Il est ainsi possible d'échantillonner à des fréquences de 32 kHz, 64 kHz, 128 kHz, 256 kHz, 512 kHz, soit des bandes passantes de 16 kHz, 32 kHz, 64 kHz, 128 kHz, 256 kHz. Toutefois, le nombre de structures fondamentales créées est réduit dans le même rapport.

A titre d'exemple d'application une configuration réalisant une fonction complexe de filtrage va maintenant être décrite.

Un système du second ordre satisfait à l'équation différentielle:

$$S'' + S'\frac{\omega}{Q} + S\omega^2 = E\omega^2$$

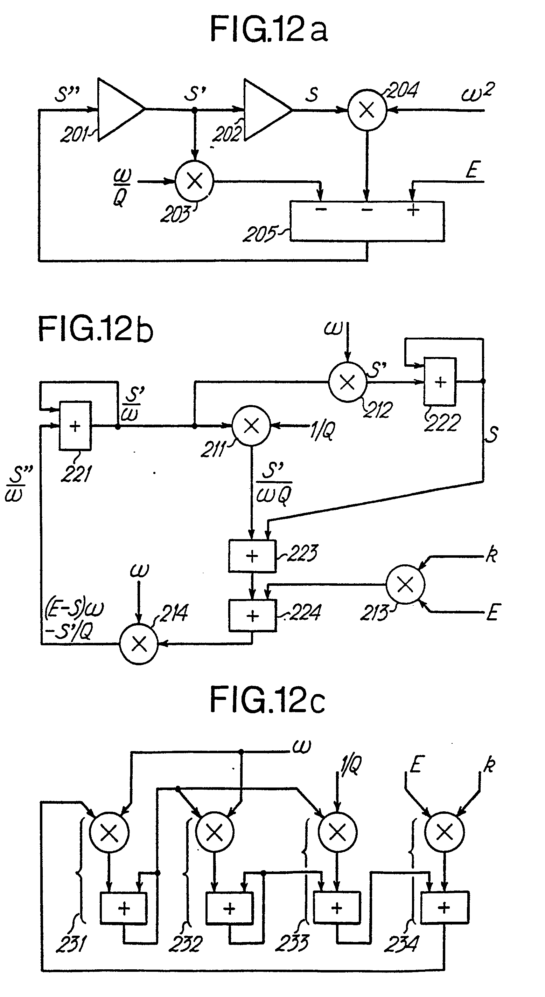

Si E est une entrée on peut montrer que S est une sortie correspondant à un filtrage passe-bas, $\frac{S'\omega}{Q}$ une sortie correspondant à un filtrage passe-bande, et $\frac{S''}{\omega^2}$ une sortie correspondant à un filtrage passe-haut. La lettre ω désigne une pulsation d'accord et Q un coefficient de surtension. Cette équation peut être résolue à partir du circuit analogique de la figure 12a. Ce circuit comprend deux intégrateurs 201 et 202, deux multiplicateurs 203 et 204 et un additionneur-soustracteur 205 à trois entrées. Les grandeurs d'entrée sont les signaux $\frac{\omega}{Q}$, appliqués sur le multiplicateur 203, $\omega^2$ sur le multiplicateur 204 et E sur une entrée positive de l'additionneur-soustracteur 205.

Les intégrateurs peuvent être réalisés numériquement à l'aide d'additionneurs-accumulateurs par un simple rebouclage, ce qui conduit au schéma de la figure 12b qui résout l'équation:

$$\frac{S''}{\omega} = (E-S)\omega - \frac{S'}{Q}$$

plus propre à fournir les trois sorties désirées. Le circuit représenté comprend quatre multiplicateurs 211, 212, 213 et 214 et quatre additionneurs 221, 222, 223 et 224. Ce schéma peut être réalisé à l'aide de l'élément fonctionnel de la figure 4 et conduit au schéma de la figure 12c qui comprend quatre ensembles 231, 232, 233 et 234.

Pour illustrer les possibilités du système qui vient d'être décrit, quelques exemples de réalisation de cartes spécialisées vont être inventoriés.

## Exemple 1

Une carte rassemble l'équivalent de 128 oscillateurs indépendants à deux entrées en fréquence. En utilisant huit cartes semblables, il est possible de disposer de 1024 oscillateurs.

Ces 128 oscillateurs sont obtenus par multiplexage temporel:
- quatre oscillateurs sont créés durant un cycle intermédiaire (déroulement complet du microprogramme),
- la sucession des 32 cycles intermédiaires formant le cycle complet conduit au total de 128.

## Exemple 2

Une carte représente l'équivalent de 224 multiplicateurs-additionneurs (32 cycles de sept multiplicateurs-additionneurs) pouvant réaliser jusqu'à 56 filtres du deuxième ordre.

**Exemple 3**

Une carte représente l'équivalent, simultanément de:
- 64 oscillateurs à plus d'une entrée, permettant de réaliser jusqu'à 32 interpolateurs ou 32 retards variables,
- 64 opérateurs linéaires (multiplicateurs-additionneurs) permettant par exemple de réaliser 16 filtres universels du deuxième ordre (passe-haut, passe-bas, passe-bande) ou des filtres d'ordres plus élevés,
- 32 unités logiques,
- et 32 oscillateurs d'écriture dans la table mémoire de fonctions.

**Exemple 4**

Une carte contient les circuits aptes à effectuer la transformée de FOURIER rapide d'un signal selon les algorithmes de COOLEY et SANDE. Les résultats suivants ont été obtenus:
- le signal étant échantillonné à la fréquence de 16000 Hz, donc une bande passante de 8000 Hz, il est possible de traiter 512 points si les valeurs sont réelles, ou 256 dans le cas de valeurs complexes. Ainsi, le signal peut avoir une durée de:

$$512 \times \frac{10^3}{16\,000} = 32 \text{ ms}$$

d'une finesse d'analyse de 30 Hz.
- en échantillonnant le signal à la fréquence de 512 kHz, donc une bande passante de 256 kHz, en traitant le même nombre de points, la durée est ramenée à 1 ms, d'où une finesse d'analyse de 1000 Hz. Les valeurs intermédiaires sont évidemment possibles.

Cette opération met en jeu environ un quart de la carte, la partie restante pouvant effectuer d'autres opérations.

Il est possible d'utiliser 8 cartes analogues, ce qui permet de traiter plusieurs signaux simultanément et ainsi de calculer des transformées de FOURIER rapides multidimensionnelles.

Le logiciel associé au système qui vient d'être décrit doit être appréhendé à divers niveaux:
- le logiciel de configuration du système: microprogrammation et macroprogrammation,
- le logiciel d'utilisation.

Pour le logiciel de configuration du système, la microprogrammation s'effectue à deux niveaux:
- l'écriture de la mémoire de microprogrammes détermine des structures fondamentales telles que celles présentées sur les figures 4, 6, 8, 9. Pour un champ d'application donné, cela conduit à la détermination une fois pour toutes d'un certain nombre de modèles qui seront les éléments de base utilisés par la suite dans ce type d'application;
- l'écriture de la mémoire d'adresses détermine les liaisons entre les structures fondamentales du modèle pour effectuer un traitement particulier à l'intérieur du champ d'application.

Les modèles étant créés, l'utilisation du système consiste essentiellement à réaliser les interconnexions, c'est-à-dire l'écriture de la mémoire d'adresses. C'est pourquoi un logiciel évolué peut être mis au point pour faciliter cette tâche.

Il peut exister plusieurs versions de ce logiciel, dit logiciel d'interconnexion, qui s'adressent à des utilisateurs distincts. Certains restent près du matériel (utilisation des grandeurs en octal, définition des mémoires utilisées, etc...) d'autres veulent ignorer la machine (utilisation de noms de variables mnémoniques, introduction des fréquences en RH, etc...).

Tous ces logiciels sont "transportables", c'est-à-dire qu'ils peuvent fonctionner sans modification sur plusieurs ordinateurs différents. Seules quelques instructions en assembleur, pour gérer les ordres d'entrées-sorties, sont à reprendre.

Quant au logiciel d'utilisation du système, il est défini par cette utilisation, en fonction du traitement à effectuer.

Après cette description, on voit que le processeur de l'invention présente les caractéristiques suivantes: il s'agit d'un périphérique intelligent et autonome. Pendant son fonctionnement, l'ordinateur h*ote peut être utilisé à d'autres tâches, telles que la gestion des modes de fonctionnement du système, ou tout traitement préparatoire ne s'effectuant pas en temps réel, les traitements en temps réel étant entièrement pris en charge par le processeur.

Le concept de base dans ce système est la multiplication apparente des structures fondamentales, par multiplexage temporel.

Le système de l'invention est apte à traiter numériquement des problèmes complexes dans les domaines linéaire et non linéaire, ce qui en fait un outil tout indiqué dans le traitement numérique du signal et de l'information. Les principales fonctions pouvant être remplies sont les suivantes:
- génération de signaux pour toutes les méthodes de synthèse connues,
- transformée de FOURIER réciproque (obtention du signal à partir de son spectre),
- mesure,
- analyse de spectre,
- détermination de fonctions de transfert,
- mesure des propriétés statiques,
- détermination des transformées de FOURIER (transformation de FOURIER rapide),
- correlation, convolution, deconvolution,
- filtrage,
- intégration cohérente,
- égalisation,
- simulation en temps réel et émulation,
- filtrage et synthèse par codage linéaire prédictif (LPC).

**Revendication**

1. Processeur numérique de signal en temps réel, destiné à être couplé à un ordinateur (10), ce processeur comprenant:
 - un circuit (20) d'entrées-sorties,
 - un circuit de couplage (40) connecté à l'ordinateur (10),
　- une unité de gestion d'entrées-sorties (30),
　- une mémoire tampon (50),
　- des moyens de traitement de signal numérique (60), l'unité de gestion d'entrées-sorties (30), la mémoire tampon (50) et les moyens de traitement de signal numérique (60) étant interconnectés par un bus d'interconnexion (81) et par un bus-système (85), le bus d'interconnexion (81) comprenant un bus récepteur (82), un bus émetteur (83) et un bus de données (84), le bus-système (85) comprenant un bus de sélection (86), un bus d'adresses (87) et un bus d'adresses de formes d'ondes (88) et un bus de données (89), les moyens de traitement de signal numérique (60) comprenant une pluralite de modules de traitement (101, 102 ... 110), chacun de ces modules étant commandé par le bus de sélection (86), le bus émetteur (83) et le bus récepteur (82), les données étant échangées entre les modules par le bus de données (84),

ce processeur étant caractérisé par le fait que chacue module comprend:

a) une unité arithmétique (115) ayant au moins une première entrée connectée à un premier bus A, une seconde entrée et une sortie connectée à un second bus B,

b) un multiplicateur rapide (120) ayant au moins une première entrée connectée au premier bus A et une seconde entrée connectée au second bus B et une sortie connectée à la seconde entrée de l'unité arithmétique (115),

c) un registre à décalage connecté au second bus B,

d) une mémoire de forme d'ondes (140) contenant des échantillons de formes d'ondes déterminées, cette mémoire étant adressée par le bus d'adresses de forme d'ondes (88) et ayant une sortie connectée au premier bus A,

e) une mémoire de données (150) ayant une entrée connectée au second bus B, une sortie connectée au premier bus A et une entrée d'adressage,

f) une mémoire d'adresses (160),

g) un premier multiplexeur d'adresses (162) ayant une première entrée connectée au bus-système (85), une seconde entrée et une sortie connectée à la mémoire d'adresses (160),

h) un compteur (161) connecté à la seconde entrée du premier multiplexeur,

i) un deuxième multiplexeur d'adresses (170) ayant une première entrée connectée au bus d'adresses (87) et une seconde entrée connectée à la mémoire d'adresses (160) et une sortie connectée à l'entrée d'adressage de la mémoire de données (150),

j) une mémoire de microprogrammes (180), chaque microprogramme contenant des instructions aptes à interconnecter les divers éléments d'un module, cette mémoire ayant une sortie connectée au bus-système (85), cette mémoire de microprogrammes étant adressée par le compteur (161),

k) une première mémoire tampon (181) connectée entre le premier bus A et le bus d'interconnexion (81) et,

l) une seconde mémoire tampon (185) connectée entre le second bus B et le bus système (85).

**Patentansprüche**

1. Digitalprozessor für Echtzeitsignale zur Kopplung an einen Rechner (10), wobei dieser Prozessor umfaßt:
 - einen Eingangs-Ausgangskreis (20),
 - einen mit dem Rechner (70) verbundenen Kopplungskreis (40),
 - eine Eingang-Ausgang-Verwaltungseinheit (30),
　ein Pufferspeicher (50),
 - digitale Signalverarbeitungseinrichtungen (60), wobei die Eingang-Ausgang-Verwaltungserinheit (30), der Pufferspeicher (50) und die digitalen Signalverarbeitungseinrichtungen (60) über einen Verbindungsbus (81) und ein Bussyste, (85) miteinander verbunden sind, der Verbindungsbus (81) einen Empfangsbus (82), einen Sendebus (83) und einen Datenbus (84) umfaßt, das Bussystem (85) einen Auswählbus (86), einen Adressenbus (87) und einen Adressenbus für Wellenformen (88) und eine, Datenbus (89) umfaßt, die digitalen Signalverarbeitungseinrichtungen (60) eine Vielzahl von Verarbeitungsmoduln (101, 102 ... 110) aufweist, von denen jeder von dem Auswählbus (86), dem Sendebus (83) und dem Empfangsdus (82) gesteuert wird, wobei die Daten zwischen den Moduln über den Datenbus (84) ausgetauscht werden,

wobei dieser Prozessor <u>dadurch gekennzeichnet</u> ist, daß jeder Modul umfaßt:

a) eine arithmetische Einheit (115), die mindestens einen ersten Eingang, der mit einem ersten Bus A verbunden ist, einen zweiten Eingang und einen mit einem zweiten Bus B verbundenen Ausgang besitzt,

b) eine schnelle Multiplikationseinrichtung (120), die mindestens einen ersten, mit dem ersten Bus A verbundenen Eingang und einen zweiten, mit dem zweiten Bus B verbundenen Eingang und einen mit dem zweiten Eingang der arithmetischen Einheit (115) verbundenen Ausgang aufweist,

c) ein mit dem zweiten Bus B verbundenes Schieberregister,

d) ein Wellenformenspeicher (140), der Proben von bestimmten Wellenformen enthält, wobei dieser Speicher über den Wellenformen-Adressenbus (88) adressierbar ist und einen mit dem ersten Bus A verbundenene Ausgang aufweist,

e) einen Datenspeicher (150), der einen mit dem zweiten Bus B verbundenen Eingang, einen mit dem ersten Bus A verbundenen Ausgang und einen Adresseneingang aufweist,

f) einen Adressenspeicher (160),

g) einen ersten Adressenmultiplexer (162), der einen ersten, mit dem Bussystem (85) verbundenen Eingang, einen zweiten Eingang und einen mit dem Adressenspeicher (160) verbundenen Ausgang aufweist,

h) einen mit dem zweiten Eingang des ersten Multiplexers verbundenen Zähler (161),

i) einen zweiten Adressenmultiplexer (170), der einen ersten, mit dem Adressenbus (87) verbundenen Eingang und einen zweiten, mit dem Adressenspeicher (160) verbundenen Eingang und einen mit dem Adresseneingang des Datenspeichers (150) verbundenen Ausgang aufweist,

j) einen Speicher (180) für Mikroprogramme, wobei jedes Mikroprogramm Befehle enthält, die zur Verbindung verschiedener Elemente eines Moduls geeignet sind, und dieser Speicher einen mit dem Bussystem (85) verbundenen Ausgang aufweist und dieser Speicher für Mikroprogramme von dem Zähler (161) adressierbar ist,

k) einer ersten Pufferspeicher (181), der zwischen dem ersten Bus A und dem Verbindungsbus (81) verbunden ist, und

l) einen zweiten Pufferspeicher (185), der zwischen dem zweiten Bus B und dem Bussystem (85) verbunden ist.

**Claim**

1. Digital, real time signal processor to be coupled to a computer (10), said processor comprising an input - output circuit (20), a coupling circuit (40) connected to the computer (10), an input - output control unit (30), a buffer memory (50) and digital signal processing means (60), the input - output control unit (30), the buffer memory (50) and the digital signal processing means (60) being interconnected by an interconnection bus (81) and by a bus system (85), the interconnection bus (81) comprising a receive bus (82), a transmit bus (83) and a data bus (84), the bus system (85) comprising a select bus (86), an address bus (87), a waveform address bus (88) and a data bus (89), the digital signal processing means (60) comprising a plurality of processing modules (101, 102...110), each of these modules being controlled by the select bus (86), the transmit bus (83) and the receive bus (82), the data being exchanged between the modules by the data bus (84), wherein each module comprises:

a) an arithmetic unit (115) having at least one first input connected to a first bus A, a second input and an output connected to a second bus B,

b) a fast multiplier (120) having at least one first input connected to the first bus A and one second input connected to the second bus B and an output connected to the second input of the arithmetic unit (115).

c) a shift register connected to the second bus B,

d) a waveform memory (140) containing given waveform samples, said memory being addressed by the waveform address bus (88) and hawing an output connected to the first bus A,

e) a data memory (150) hawing an input connected to the second bus B, an output connected to the first bus A and an address input,

f) an address memory (160),

g) a first address multiplexer (162) having a first input connected to the bus system (85), a second input and an output connected to the address memory (160),

h) a counter (161) connected to the second input of the first multiplexer,

i) a second address multiplexer (170) having a first input connected to the address bus (87) and a second input connected to the address memory (160) and an output connected to the addressing input of the data memory (150),

j) a microprogramme memory (180), each microprogramme containing instructions able to interconnect the various components of a module, said memory having an output connected to the bus system (85), said microprogramme memory being addressed by the counter (161),

k) a first buffer memory (181) connected between the first bus A and the interconnection bus (81) and

l) a second buffer memory (185) connected between the second bus B and the bus system (85).

# FIG.1

FIG.2

# FIG.3

BUS S . 85

BUS S ~ 85

100

BUS A

181

81

120

115

140

150

170

160

162

161

85
BUS S

85
BUS S

130

85

185

180

BUS B

0 104 290

# FIG.5a

$$b_{i+1} = a_i b_i$$

# FIG.5b

$$b_{i+1} = a_i + b_i$$

# FIG.5c

# FIG.5d

# FIG.4

# FIG.6

FIG.7

N°1  N°2

N°3  N°4

# FIG.8

# FIG.9

# FIG.10

FIG.11

# FIG.12 a

# FIG.12 b

# FIG.12 c